# EUROPEAN PATENT APPLICATION

(11) **EP 4 650 233 A1**
(43) Date of publication of application: **19.11.2025**
(21) Application number: 25176128.4
(22) Date of filing: 13.05.2025
(51) Int. Cl.: B60T 7/04, B60T 7/06, G05G 1/40, G05G 1/405, G05G 1/42

(54) **PEDAL SET FOR A MOTOR VEHICLE**

(30) Priority: 15.05.2024 IT 202400010993
(71) Applicant: FERRARI S.p.A., 41100 Modena (IT)
(72) Inventor: ANNEQUIN-DIGOND, Thierry, 41100 Modena (IT); CONIGLIARO, Vito, 41100 MODENA (IT)
(74) Representative: Studio Torta S.p.A.

(57) **Abstract**

A pedal set (1, 1') for a motor vehicle (2, 2') is described as comprising a support body (15), a pedal (16) which can be operated by a driver, a guide (21) defined by the support body (15) and a slider (22) which can slide within the guide (21, 21') and is operatively connected to the pedal (16).

## Description

### CROSS-REFERENCE TO RELATED PATENT APPLICATIONS

This patent application claims priority from Italian patent application no. 102024000010993 filed on May 15, 2024, the entire disclosure of which is incorporated herein by reference.

### TECHNICAL FIELD

The present invention relates to a pedal set for a motor vehicle.

### BACKGROUND

Motor vehicles are known to comprise an engine, four wheels and a braking system which can be operated to exert braking torques on the respective wheels and reduce the vehicle advancement speed.

Known-type motor vehicles further comprise a command member, e.g. a brake pedal, intended to command the braking system and which can be activated by the driver.

In greater detail, the braking system comprises, for each wheel:
- a brake caliper;
- a disc integrally rotatable with the wheel; and
- a fluidic line within which an operating liquid, such as oil, is placed and fluidically connected to the command member.

Each brake caliper, in turn, comprises:
- a support body housing the relative brake disc;
- a pair of pads that can be moved between respective rest positions wherein they are spaced from the relative brake disc, and respective operating positions wherein they contact the relative brake disc and exert the braking torque on the relative wheel; and
- a pair of chambers fluidically connected to the relative fluidic line and within which the respective pads are movably housed between the corresponding operating and braking positions.

The operation of the command member causes the pressure increase of the operating liquid in the fluidic lines and the consequent pressure increase in the chambers housing the brake callipers.

This pressure increase causes the pads to move from the relative rest positions to the relative operating positions.

Known-type pedal sets essentially comprise:
- a support structure fixed to a vehicle body;
- the pedal which can be operated by a driver's foot; and
- a lever to which the pedal is fixed and pivoted at a fixed point to the support structure, so that the pedal is constrained to perform a movement stroke along an arc of circumference.

In greater detail, the fixed point can be arranged above or below the pedal.

Known-type pedal sets further comprise:
- a pedal tip connected to the lever in a position eccentric relative to the fixed pivoting point to the support structure and operatively connected to a brake pump plunger; and
- a spring interposed between the vehicle body and the lever in a position other than the fixed pivoting point and designed to allow the pedal to spring back once the driver's action ceases.

Very briefly, the actuation of the pedal by the driver determines, through the interaction between the tip and plunger, the increase in pressure of the operating fluid within the fluidic lines and the consequent movement of the pads into their respective operating positions.

Known-type solutions require a wide pedal stroke in order to allow the operating fluid to reach a certain level of pressure without excessively raising the actuation force required to the driver.

The extension of this arc-of-circumference stroke inevitably constrains the position of the driver inside the cockpit.

The need is felt in the field for maximum flexibility in relation to the pedal movement trajectory, so as to allow, for example, greater freedom in the position required to the driver inside the cockpit.

There is also a need in the field to be able to vary the trajectory of the pedal movement, reducing the necessary reconfiguration operations as much as possible.

### SUMMARY

The aim of the present invention is to create a pedal set for a motor vehicle, which allows to fulfil at least one of the aforementioned needs.

The aforesaid aim is achieved by the present invention, as it relates to a pedal set for a motor vehicle according to what is defined by claim 1.

### BRIEF DESCRIPTION OF THE DRAWINGS

For a better understanding of the present invention, two preferred embodiments are described below, by way of non-limiting example only and with reference to the accompanying drawings, wherein:
- Figure 1 is a perspective view of a first embodiment of a pedal set made according to the dictates of the present invention in a first operating position and in a first pedal adjustment position;
- Figure 2 shows a section along the line II-II of Figure 1 in the first operating position and in the first pedal adjustment position together with a first embodiment of a vehicle braking system, with parts removed for clarity;
- Figure 3 shows a section along the line II-II of Figure 1 in the first operating position and in the first pedal adjustment position together with a second embodiment of the vehicle braking system, with parts removed for clarity;
- Figure 4 a section along the line II-II of Figure 1 in the second operating position of the pedal and in the first adjustment position of the pedal together with the first embodiment of a braking system with parts removed for clarity;
- Figure 5 is an exploded view of the pedal set of Figure 1 in the first operating position of the pedal and in the first adjustment position;
- Figure 6 is a section along the line II-II of Figure 1 in the first operating position and in a second adjustment position of the pedal;
- Figure 7 is a perspective view of a second embodiment of a pedal set made according to the dictates of the present invention in the first operating position and in the first adjustment position of the pedal;
- Figure 8 is a section along the line VIII-VIII of Figure 7 in the first operating position of the pedal and in the first adjustment position of the pedal;
- Figure 9 is a front view of the pedal set of Figure 7 in the first pedal operating position and in the first pedal adjustment position, with parts removed for clarity; and
- Figure 10 is a section along the line VIII-VIII of Figure 6 in the second operating position of the pedal and in the first adjustment position of the pedal.

### DESCRIPTION OF EMBODIMENTS

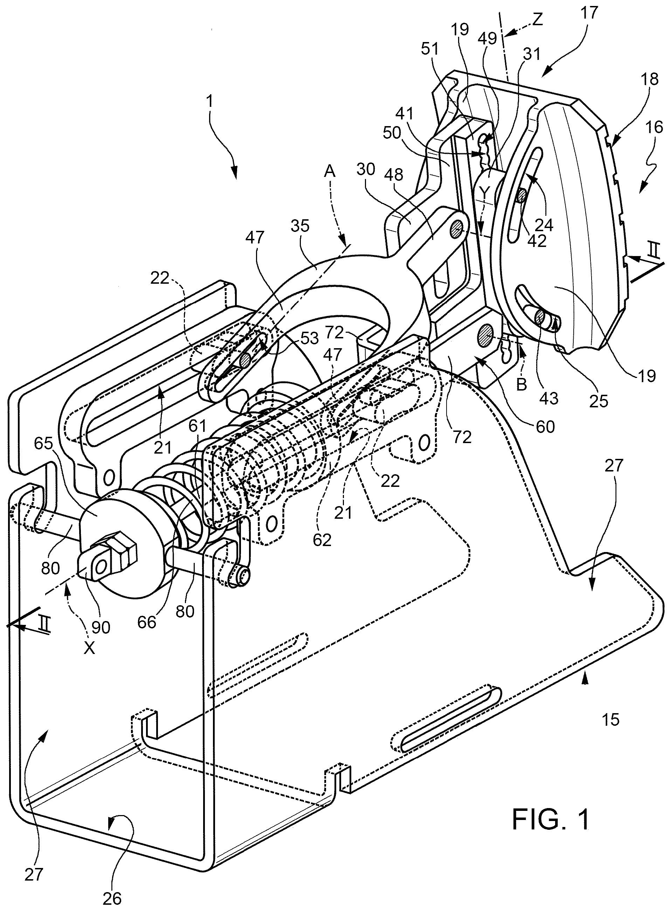

With reference to Figures 1 to 6, a first embodiment of a pedal set for a motor vehicle 2, 2' is denoted by 1.

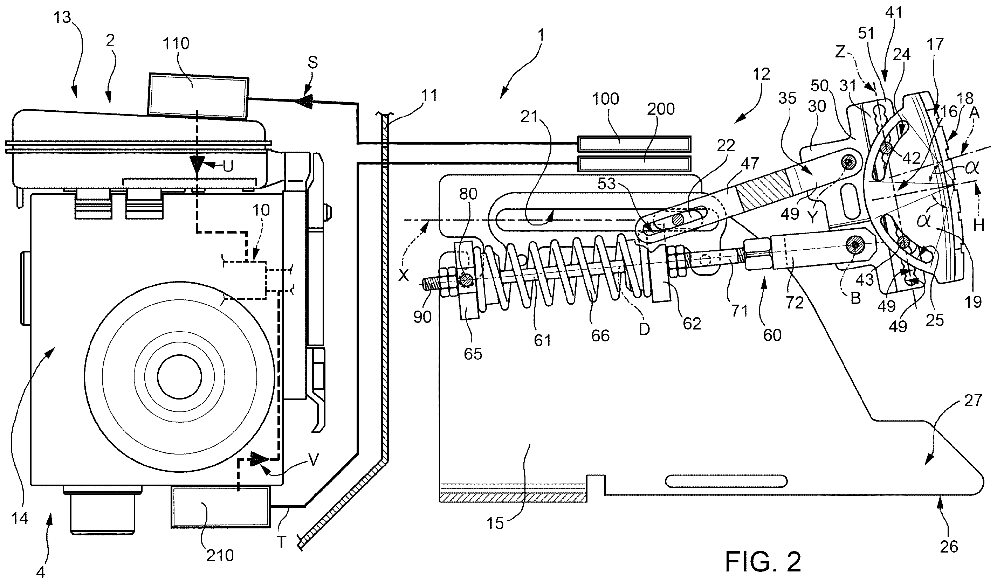

The motor vehicle 2, 2' essentially comprises:
- a vehicle body not shown and defining a cockpit (also not shown);
- the pedal set 1 housed inside the vehicle body;
- a plurality of wheels (not shown); and
- a braking system 4 only schematically shown in the Figures 2 to 4, and designed to generate braking torques on one or more respective wheels.

Very briefly, the braking system 4 essentially comprises:
- a plurality of braking devices (not shown) associated with respective wheels and each movable, in a known manner, between a respective rest position and an operating position in which it exerts a braking torque on the respective wheel;
- a hydraulic circuit containing a fluid under pressure.

The hydraulic circuit is shown limited to:
- a brake pump 14; and
- an actuator 10, preferably an electro-hydraulic actuator, which can be operated to command the brake pump 14 so as to increase fluid pressure and move the braking devices to their respective operating positions.

The motor vehicle 2, 2' also comprises a flame baffle 11, which divides an area 12 housing the pedal set 1 and an area 13 housing the brake pump 14 from one another.

The pedal set 1 essentially comprises:
- a support body 15 fixed to the body of the vehicle 2, 2'; and
- a pedal 16 which can be operated by a driver to adjust the braking torques exerted by the braking devices on the respective wheels.

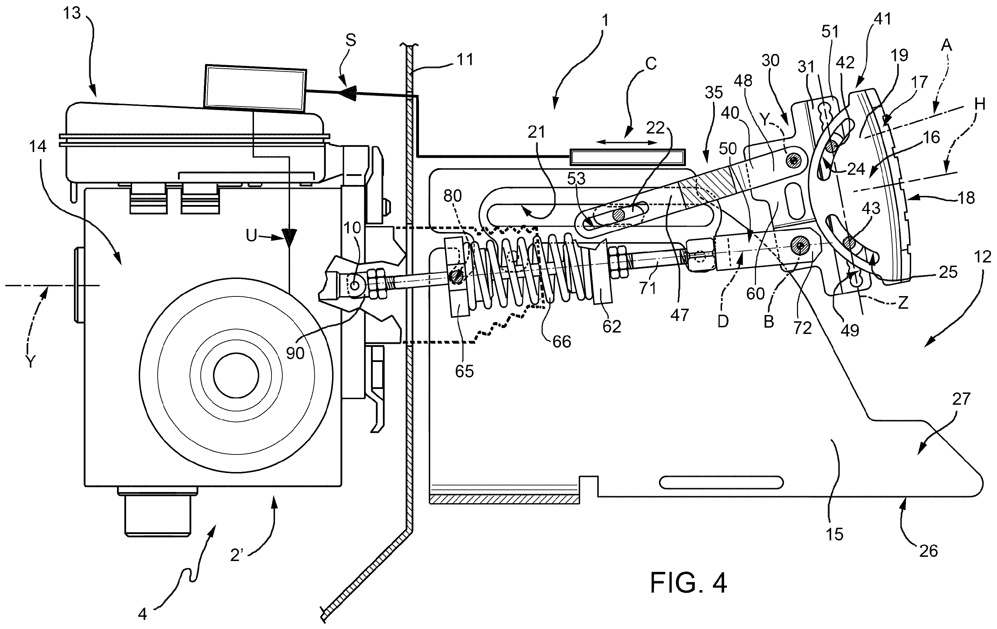

In particular, as a result of the pressure exerted by the driver's foot, the pedal 16 can be moved between:
- a rest position (Figures 2, 3 and 6), at which the braking system exerts substantially no braking torque on the wheels; and
- a plurality of operating positions (only one of which is shown in Figure 4), at which the braking system substantially exerts progressively greater braking torques on the wheels.

The support body 15 essentially comprises a base 26 lying on a horizontal plane, and a pair of walls 27 protruding cantilevered from the base 26 and parallel to one another.

Advantageously, the pedal set 1 comprises:
- a pair of guides 21 defined by the support body 15; and
- a pair of sliders 22 which can slide within respective guides 21 and operatively connected to the pedal 16.

The guides 21 extend along an axis X arranged, in use, horizontally and parallel to a longitudinal direction of the motor vehicle 2, 2', and are spaced parallel to an axis Y arranged, in use, horizontally and parallel to a transverse direction of the motor vehicle 2, 2'.

In the case shown, the guides 21 are parallel to one another and are straight.

The pedal 16, in turn, comprises:
- a slipper 17 defining an abutment surface 18 for the driver's foot; and
- a pair of appendages 19 protruding cantilevered from the slipper 17 on the opposite side of the abutment surface 18.

In particular, the appendages 19 are parallel to one another and spaced from one another parallel to the axis Y.

The appendages 19 are also shaped as curved and tapered walls starting from the slipper 17, proceeding from the opposite side of the abutment surface 16.

Preferably, each appendage 19 defines, in turn, a pair of grooves 24, 25 spaced apart from one another and shaped as respective arcs of circumference α concentric to one another. The arcs of circumference α are tangent to an axis Z and lie orthogonal to the axis Y.

The axis Z is, in the case shown, orthogonal to the axes X, Y and is arranged, in use, vertically.

The grooves 24, 25 are, in particular, running parallel to the axis Y.

The pedal set 1 comprises:
- a plate 30 connected to the pedal 16, so as to allow, independently of one another, the adjustment of the position of the pedal 16 along an axis Z and according to the arc of circumference α;
- a fork 35 connected to the sliders 22 and hinged to the plate 30 along an axis Y orthogonal to the axes X, Z; and
- a pair of connecting rods 31 extending parallel to the axis Z and spaced parallel to the axis Y.

The pedal 16 is supported on the plate 30 so as to advance along an axis H orthogonal to the axis Y.

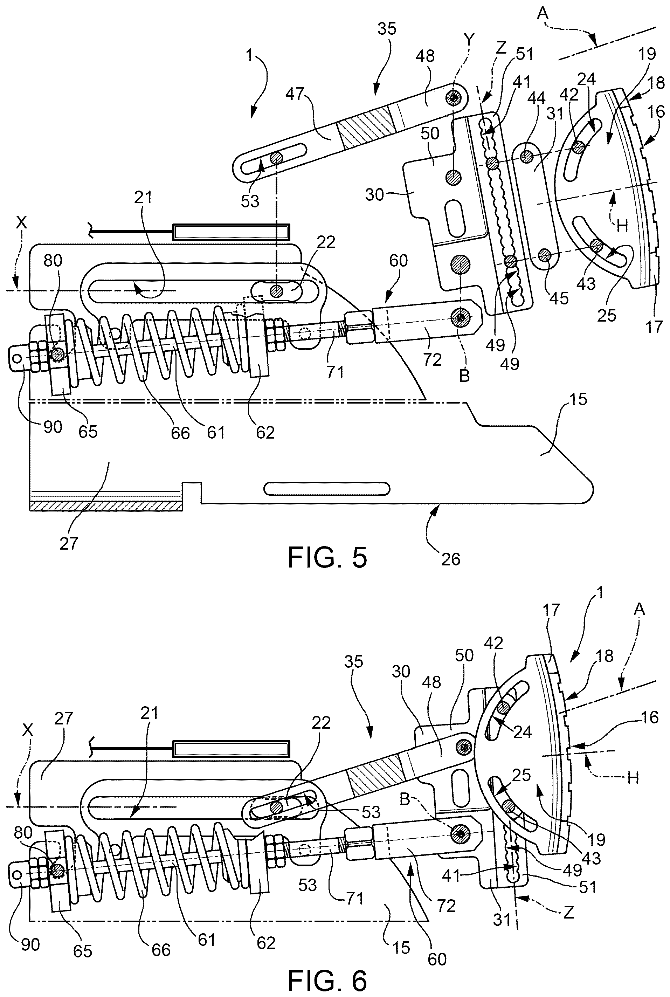

The pedal 16 is movable relative to the plate 30 between a plurality of adjustment positions (one of which is shown in Figure 2 and another which is shown in Figure 6), in each of which the pedal 16 is arranged in a respective position relative to the plate 30.

Specifically, in each adjustment position, the axis H assumes a corresponding position relative to the plate 30 when the pedal 16 is in the rest position.

The plate 30, in turn, comprises:
- a wall 50 lying on a plane orthogonal to the axis Y; and
- a protrusion 51 interposed between the wall 50 and the pedal 16, protruding from the wall 50 on both sides along the axis Y and defining a pair of slots 41 extending parallel to the axis Z.

Each connecting rod 31 is interposed between a relative appendage 19 of the pedal 16 and the protrusion 51.

Each connecting rod 31 extends along the axis Z and defines a pair of axial end holes 44, 45 (shown only in Figure 5) that are opposite to one another.

In particular, the axis Z is orthogonal to the axis Y and is inclined relative to the axis X.

Each slot 41 comprises a plurality of seats 49 consecutive to one another along the axis Z and open parallel to the axis Y.

The pedal set 1 further comprises:
- a pair of pins 42 (only one of which is visible in the accompanying Figures) each slidingly engaging a seat 49 of a related slot 41 and a related groove 24, and each fixedly engaging a related hole 44 of the corresponding connecting rod 31; and
- a pair of pins 43 (only one of which is visible in the accompanying Figures) each slidingly engaging a seat 49 of a relative slot 41 and a relative groove 25, and each fixedly engaging a relative hole 45 of the corresponding connecting rod 31.

The seats 49 are shaped so as to lock therein the respective pins 42, 43 and to allow, upon sliding of the pins 42, 43 parallel to the axis Z, the removal of the pins 42, 43 out of the respective seats 49 and the immediate snap-in locking into the seats 49 arranged immediately consecutive along the axis Z.

Thus, it is possible to adjust the position of the pedal 16 relative to the support body 15 along the axis Z by moving the pins 42, 43 within the respective slots 41, and to adjust the inclination of the pedal 16 relative to the support body 15 around the axis Y and according to the arcs α by adjusting the relative position of the pins 42, 43 within the respective grooves 24, 25.

The fork 35 in turn comprises:
- an arm 48 hinged to the plate 30 about the axis Y;
- a pair of arms 47 extending around respective axes A in use horizontal and inclined relative to the axis X, spaced parallel to the axis Y, and defining respective grooves 53 inclined relative to the axis X and fixed to respective sliders 22.

The arm 48 delimits the fork 35 on the side of the pedal 16.

Specifically, the arms 47 are constrained to the sliders 22 so that the angle between the respective extension axes A and the axis X is fixed.

The arms 47 delimit the fork 35 on the opposite side of the arm 48 relative to the fork 35.

In the case shown, the arms 47 extend symmetrically relative to the arm 48.

The pedal set 1 further comprises:
- a fork 60 hinged to the plate 30 about an axis B parallel to the axis Y;
- a stem 61 fixed to the fork 60 and defining a disc 62 on the opposite side of the fork 60;
- a disc 65 fixed to the support body 15; and
- a spring 66 interposed between discs 62, 65.

The fork 60, stem 61 and spring 66 extend along an axis D lying in a plane defined by the axes X and Z and orthogonal to the axis Y.

The spring 66 creates the load on the pedal 16 when the driver pushes with his foot on the surface 17, and allows the return of the pedal 16 along the axis D when the driver moves his foot away from the surface 17.

More precisely, the fork 60 in turn comprises:
- a pair of arms 772 hinged to the plate 30 around the axis B;
- an arm 71 integrally connected to the stem 61.

The arms 71 delimit the fork 60 on the side of the pedal 16 while the arms 72 are interposed between the arms 71 and the pedal 16.

In the case shown, the arms 71 and 72 are defined by the fork 70 in one single piece.

The disc 65 is fixed to the walls 27 of the support body 15 by respective rods 80 radial to the axis D.

The spring 66 is, in the case shown, a helical spring.

In particular, the axis B is spaced from the axis Y.

The motor vehicle 2 further comprises (Figures 2 and 4):
- a sensor 100 designed to generate a signal S associated with the position of the sliders 22 along the axis X or the force exerted by the driver on the pedal 16; and
- a control unit 110 programmed to receive, as an input, the signal S and to generate, as an output, a command U for the actuator 10.

The pedal set 1, the control unit 110 and the sensor 100 thus realise a "remote" braking system also known as "brake-by-wire", i.e. without any mechanical connection between the pedal 16 and the actuator 10.

In the case shown, the sensor 100 is a shake sensor and the sliders 22 can slide within their respective guides 21 for strokes C above a threshold value.

Specifically, the shake sensor 100 creates a signal associated with the length of the stroke C of the pedal 16.

Alternatively, the sensor 100 is a load cell when the sliders 22 can slide within their respective guides 21 for strokes C above a threshold value. In such a case, the load cell detects the value of the force exerted by the driver's foot on the abutment surface 18 of the pedal 16.

The motor vehicle 2 further comprises (Figures 2):
- a back-up sensor 200 to generate a back-up signal T associated with the position of the sliders 22 along the axis X or the force exerted by the driver on the pedal 16; and
- a back-up control unit 210 programmed to receive, as an input, the signal T and generate, as an output, a command V for the actuator 10, in the event of failure of the sensor 100 or of the control unit 110.

The control unit 210 and sensor 200 thus create a "remote" back-up braking system also known as "brake-by-wire", i.e. without any mechanical connection between the pedal 16 and the actuator 10.

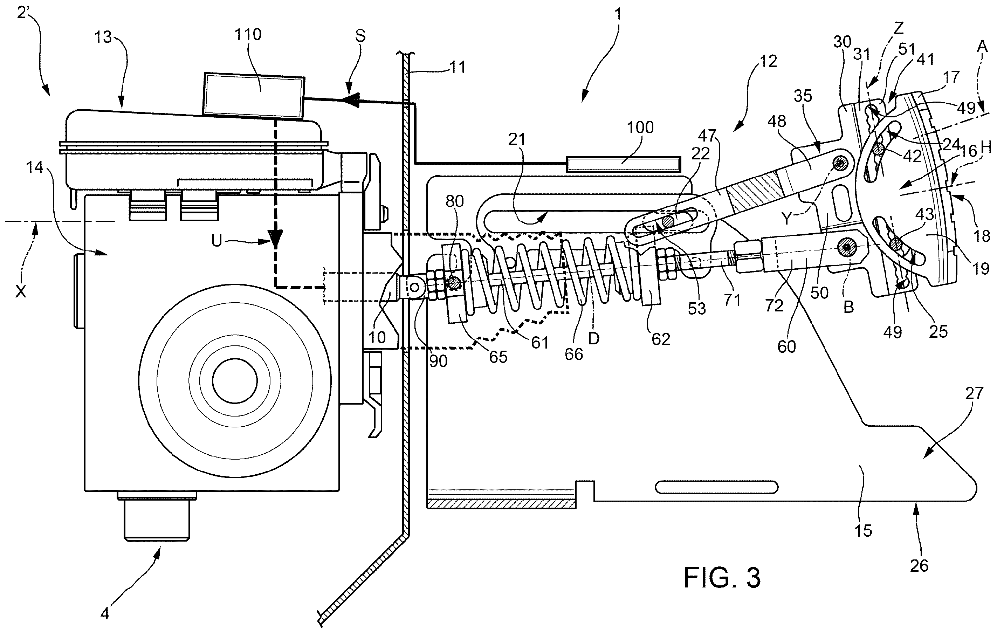

In an alternative embodiment of the motor vehicle 2' shown in Figures 3 and 4, the actuator 10 is mechanically connected to the disc 65 of the stem 61.

More precisely, the actuator 10 is hinged at an end 90 of the stem 61 opposite the fork 70 and axially protruding from the disc 65 itself around an axis D parallel to the axis Y.

Thus, the actuator 10 is mechanically connected to the stem 61 to create a mechanical back-up braking system in the event of a failure of the sensor 100 or of the control unit 110.

The operation of the pedal 1 is described below from a condition shown in Figure 2 wherein the pedal 16 is in the first operating position and in the first adjustment position.

From this condition, the driver exerts pressure with his or her foot on the abutment surface 18 of the pedal 16, in order to brake the motor vehicle 2, 2'.

The advancement of the pedal 16 along the axis H determines, by the fork 35, the advancement of the sliders 22 within their respective guides 21 parallel to the axis X, and by the fork 35, the advancement of the stem 61 parallel to the axis D and the consequent compression of the spring 66.

In the case of a load cell, the sensor 100 generates the signal S associated with the force exerted on the sliders 22.

Alternatively, in the case of a shake sensor, the sensor 100 generates the signal S associated with the position of the sliders 22.

The control unit 110 receives, as an input, the signal S and consequently processes the command U for the actuator 10 of the brake pump 14.

This creates a "remote" braking system also known as brake-by-wire.

When the driver releases the foot pressure from the abutment surface 18, the spring 66 causes the return along the axis D of the fork 60, and thus the retraction of the plate 30, sliders 22 and pedal 16 to the rest position.

If it is necessary to move the pedal 16 from the first adjustment position to the second adjustment position, it is sufficient to:
- slide the pins 42, 43 within the respective slots 41 along the axis Z, so as to adjust the position of the pedal 16 relative to the support body 15 along the axis Z; and/or
- vary the relative position between the pins 42, 43 and their respective grooves 24, 25, so as to adjust the inclination of the pedal 16 relative to the support body 15 around the axis Y and along the corresponding arcs α.

With reference to the motor vehicle 2 (Figures 2 and 4), in the event of a failure of the sensor 100 or of the control unit 110, the back-up sensor 200 generates the back-up signal T associated with the position of the sliders 22 along the axis X or the force exerted by the driver on the pedal 16.

The back-up control unit 210 receives, as an input, the signal T and generates, as an output, the command V for the actuator 10,

The motor vehicle 2 thus creates a "remote" back-up braking system also known as "brake-by-wire", i.e. without any mechanical connection between the pedal 16 and the actuator 10.

With reference to Figure 3, in the event of a failure of the sensor 100 or of the control unit 110, the stem 61 operates the actuator 10.

A mechanical back-up braking system is thus created.

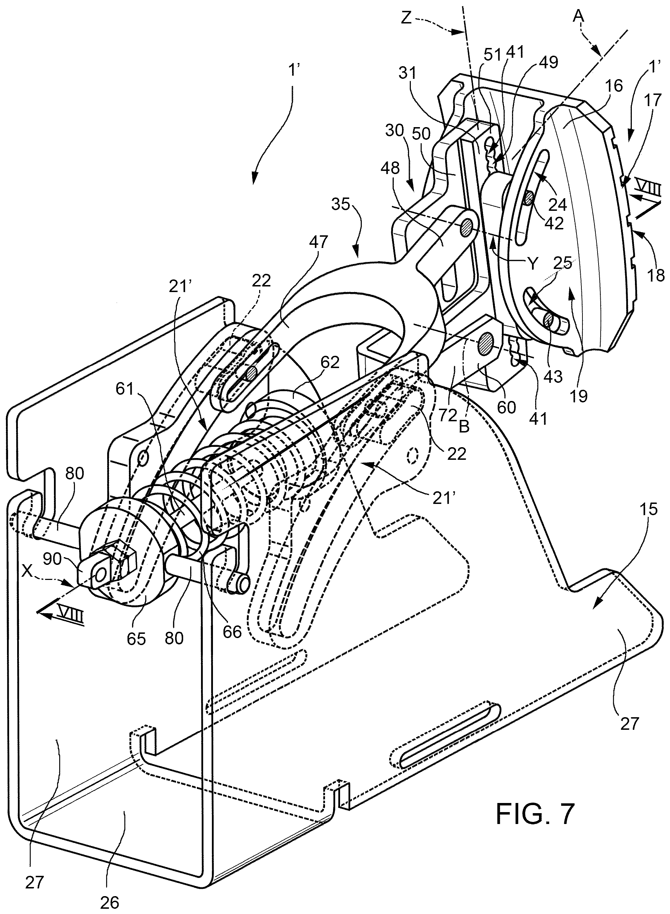

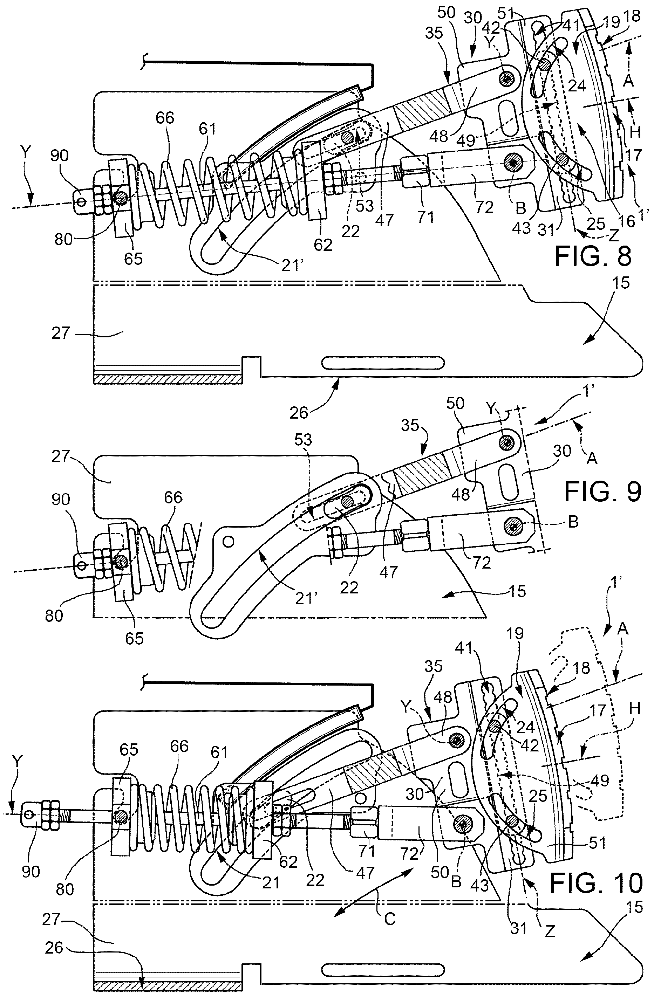

With reference to Figures 7 to 10, a pedal set according to a different embodiment of the present invention is denoted by 1'.

The pedal set 1' is similar to the pedal set and will be described below only in so far as it differs from the latter; equal or equivalent parts of the pedal sets 1, 1' will be marked, where possible, with the same reference numbers.

In particular, the pedal set 1' differs from the pedal set 1 in that each guide 22' is curved.

More specifically, each guide 22' extends at progressively decreasing distances from the base 26 of the support body 15.

The operation of the pedal set 1' is completely similar to that of the pedal set 1 and is therefore not described in detail.

From an examination of the present invention, the advantages that it allows to be obtained are evident.

In particular, the pedal set 1, 1' comprises a pair of sliders 22 which can slide within respective guides 21, 21' following the movement of the pedal 16 from the rest position to the operating positions.

It is thus possible to achieve different movement trajectories of the pedal 16 by simply suitably adapting the guides 21, 21', unlike the known solutions commented on in the introductory part of the present description.

It is even possible to move the pedal 16 along a substantially straight trajectory and/or with a particularly small maximum stroke C, e.g. in the order of a few millimetres.

The possibility of achieving different movement trajectories of the pedal 16 allows to define with maximum flexibility the driver's driving position within the vehicle body. It is even possible to configure the driver's driving position so that the driver is lying down within the cockpit of the motor vehicle 2, 2'.

It is thus possible to reconfigure the motor vehicle 2, 2' with different driving positions, simply by replacing the currently mounted pedal set 1, 1' with a new pedal set 1, 1' having the guides 21, 21' configured differently.

This makes it possible to give the driver different driving impressions, simply by replacing the pedal set 1, 1'.

In the event of a failure of the sensor 100 and/or of the control unit 110, the pedal set 1, 1' enables both a "remote" back-up braking system when applied to the motor vehicle 2 (Figure 2) and a mechanical back-up braking when applied to the motor vehicle 2' (Figures 3 and 4).

Finally, it is possible to adjust the position of the pedal 16 relative to the support body 15 along the axis Z by moving the pins 42, 43 within the respective slots 41, and to adjust the inclination of the pedal 16 relative to the support body 15 around the axis Y by moving the relative position between the pins 42, 43 and respective grooves 24, 25 along the respective arcs α.

Finally, it is clear that modifications and variations can be made to the pedal set 1, 1' made according to the present invention, which however do not fall outside the scope of protection defined by the Claims.

In particular, the pedal set 1, 1' could comprise a single slider 22 sliding in a single guide 21.

The pedal set 1' could also be used in the motor vehicle 2 with a "remote" back-up braking system of the type shown in Figure 2 and in the motor vehicle **2'** with a mechanical braking system of the type shown in Figures 3 and 4.

## Claims

1. A pedal set (1, 1') for a motor vehicle (2, 2') comprising:
- a support body (15); and
- a pedal (16), which can be operated by a driver;
**characterized in that** it comprises:
- a guide (21, 21') defined by said support body (15); and
- a slider (22), which can slide within said guide (21, 21') and is operatively connected to said pedal (16).

2. The pedal set according to claim 1, **characterized in that** said guide (21) is straight.

3. The pedal set according to claim 1, **characterized in that** said guide (21') is curved.

4. The pedal set according to any one of the preceding claims, **characterized in that** it comprises a first fork (35), which is directly or indirectly hinged to said pedal (16) and is connected to said slider (22).

5. The pedal set according to claim 4, **characterized in that** it comprises:
- a plate (30), on which said first fork (35) is hinged;
- at least one pin (42, 43) fixed to said plate (30) and to said pedal (16);
- at least one first groove (41; 24, 25), within which said pin (42, 43) is movable, so as to adjust the position of said pedal (16) relative to said plate (30).

6. The pedal set according to claim 5, **characterized in that** said first groove (41) extends along a first axis (Z), and **in that** it comprises a second groove (24, 25), which at least partly overlaps said first groove (41) and within which said pin (42, 43) is movable;
said second groove (24, 25) being shaped as an arc (α) of a circle tangential to said first axis (Z);
one (30) of said plate (30) and pedal (16) defining said first groove (41);
the other one (16) of said plate (30) and pedal (16) defining said second groove (24, 25).

7. The pedal set according to claim 6, **characterized in that** it comprises two second grooves (24, 25), which are angularly spaced apart from one another and are concentric.

8. The pedal set according to any one of the preceding claims, **characterized in that** it comprises:
- a second fork (60) operatively connected to said pedal (16);
- an element (65) fixed to said support body (15); and
- elastic means (66) interposed between said second fork (60) and said element (65).

9. A motor vehicle according to any one of the preceding claims, **characterized in that** it comprises:
- at least one wheel;
- a braking device movable to an operating position, in which it exerts, in use, a braking torque upon said wheel;
- an actuator (10), which can be operated to move said braking device to said operating position;
- a first sensor (100) designed to generate a first signal (S) associated with a quantity representative of the command exerted, in use, by said driver upon said pedal (16); and
- a first control unit (110) programmed to receive, as an input, said signal (S) and to generate, as an output, a first command (U) for said actuator (10) associated with said first signal (S), so as to achieve a remote braking mode.

10. The motor vehicle according to claim 9, **characterized in that** said sensor (100) is a vibration sensor or a load cell.

11. The motor vehicle according to claim 8 or 9, **characterized in that** it comprises:
- a second sensor (200) designed to generate a second signal (S) associated with said quantity representative of the command exerted, in use, by said driver upon said pedal (16);
- a second control unit (210) configured to receive, as an input, said signal and to generate, as an output, a second command (V) for said actuator (10) associated with said second signal (T), in the event of a failure of said first sensor (100) and/or of said first control unit (110).

12. The motor vehicle according to claim 9 or 10, when they depend on claim 8, **characterized in that** said actuator (10) and said second fork (60) are connected to one another, so as to ensure that said actuator (10) moves said braking device to said operating position, in case of failure of said first sensor (100) and/or of said first control unit (110).
